# EUROPEAN PATENT APPLICATION

(11) **EP 2 458 698 A1**
(43) Date of publication of application: **30.05.2012**
(21) Application number: 11173951.2
(22) Date of filing: 14.07.2011
(51) Int. Cl.: H02G 1/10, H02G 9/02

(54) **Method and device for introducing an electrical cable at a depth in a seabed.**

(30) Priority: 16.07.2010 NL 2005099
(71) Applicant: Gebr. van Leeuwen Harmelen B.V., 3481 MC Harmelen (NL)
(72) Inventor: Adelaar, Klaas, 6851 CN HUISSEN (NL)
(74) Representative: Hollaar, Cornelis

(57) **Abstract**

The method is carried out for introducing an array cable of a wind farm at a depth in a seabed. The cable is introduced in the seabed, such that the cable extends at a depth in the water floor from a first location to a second location at water floor level. The method comprises a step of sinking a drill-pull rig to the seabed and drilling a drill string from the first location to the second location to generate a bore hole. The used drilling technique is a horizontal directional drilling technique. An end of the cable is positioned at the second location; the end of the cable is coupled to an end of the drill string at the second location; the drill string is pulled back through the bore hole together with the cable to the first location; and the cable is decoupled from the drill string at the first location.

## Description

The present invention relates to a method for introducing an electrical cable, in particular for a wind farm, in particular an array cable, at a depth in a water floor, in particular in a seabed, of a water body, such that the cable extends from a first location to a second location at the water floor. Further, the invention relates to an underwater cable digging system for carrying out the method.

A wind farm is a group of wind turbines in a same location used for production of electric power. The wind farm may comprise of a few dozen to several hundred individual wind turbines, and cover an extended area of hundreds of square miles. A wind farm is preferably located off-shore to take advantage of strong winds blowing over the surface of an ocean or lake. Sometimes a distinction is made between near shore and off shore wind farms. In this patent application an off shore wind farm is mend in a broader context and means a wind farm above a water level situated in a water body instead of a wind farm above land.

Individual wind turbines are interconnected with a medium voltage (usually 34.5 kV) power collection system and a communications network. At a trafo-station, this medium-voltage is increased with a transformer for connection to a high voltage transmission system for transporting the generated electricity to land. The power collection system comprises a grid of array cables which interconnect the wind turbines of the wind farm. Each wind turbine is connected under water by an array cable at the base of a shaft of a wind turbine. The array cables in a wind farm have to be put into the water floor to protect the cables from damages. The cables are normally installed at a depth of about one meter under the water floor.

From practise a method is known for applying array cables in a seabed for interconnecting wind turbines in a wind farm and for connecting the wind turbines to the power collection system. In the known method a vessel is used for transporting an array cable to the wind farm. A large reel is installed on board of the vessel which reel comprises an array cable which is sufficient long to connect a plurality of wind turbines. The array cable may have a length of a few thousand meters. The vessel is sailing to a first wind turbine and at that position oriented in the right direction to start laying down the array cable at the water floor. The vessel sails from the first wind turbine to a second wind turbine while the array cable is winded from the reel and laid down at the water floor. After reaching the second wind turbine, the laid down array cable is cut from the reel to a cable piece and the vessel is oriented for a next track to a third wind turbine. When the cable piece is layed down between two wind turbines over the seabed, the cable piece has to be brought into the seabed. A special remote underwater vehicle which drives over the seabed is used to plough the cable piece subsequently into the water floor at a ploughing depth of about a meter.

The known method has several disadvantages.

A first disadvantage is that the known method brings a lot operations. A lot of vessel tracks are necessary to lay down all the cable pieces at the seabed. For a large windfarm including about a hundred wind turbines, this implicates that several high capital vessels are necessary to complete the job of interconnecting the wind turbines. Additionally, a large amount of underwater vehicles are necessary to plough all the cable pieces into the seabed.

Another disadvantage is that the achieved depth of a ploughed cable piece of about one meter does not protect the cable under all circumstances. It appears that strong water currents and anchors of present boats reveal the ploughed cables from the seabed. The revealed cable pieces are susceptible to damages, e.g. as a result of a clutch with an anchor of a ship or a dragging net of a fisherman ship.

It is an object of the present invention to at least partially eliminate at least one of the above mentioned drawbacks and/or to provide a useable alternative. In particular, it is an object of the invention to provide a method which reduces operational efforts.

According to the invention, this object is achieved by a method as defined in claim 1.
The method according to the invention is carried out for introducing an electrical cable, in particular an array cable of a wind farm, at a depth in a water floor of a water body. Generally, the water body is a sea, and the water floor is a seabed. The cable is introduced in the water floor, such that the cable extends at a depth in the water floor from a first location to a second location at water floor level. The method according to the invention comprises a step of sinking a drill-pull rig to the water floor and drilling a drill string from the first location to the second location to generate a bore hole. Preferably, a used drilling technique is a HDD, horizontal directional drilling technique. Further, the method comprises steps of positioning an end of the cable at the second location; coupling the end of the cable to an end of the drill string at the second location; pulling the drill string back through the bore hole together with the cable to the first location; and decoupling the cable from the drill string at the first location. After carrying out the method, the cable extends from the first location through the bore hole to the second location, wherein both ends of the cable are located outside the bore hole. The ends of the cable can be electrically connected to a e.g. a wind turbine at the first or second location. By carrying out the method, wind turbines can be electrically interconnected and/or connected to a power collection system.

In comparison with a prior art ploughing technique, the drilling technique provides several advantages. A first advantage is that the drilling operation is performed from one location, the first location, or so called starting position. It is not necessary to make a track over the seabed with a ploughing vehicle along the whole length of the array cable to plough the array cable in the seabed. If a ploughing technique is used, obstacles like stones at the seabed may make it impossible to plough an array cable in the sea bed. By using a drilling operation, obstacles at the seabed are not or less relevant, the drill string simply passes beneath the obstacles through the seabed. Obstacles which are situated in the seabed can be circumvented by a directional drilling head.

Additionally, the drilling process in stead of a ploughing process does less disturb the underwater environment. Sealife, like flora and coral which live close to the seabed and in an upper region of the seabed are spared. The drilling operation is for that reason more environmental friendly.

Advantageously, the method according to the invention may reduce operational efforts. The method may be more cost effective than a method wherein the cable is ploughed into the seabed. Necessary capital can be minimized. Particularly, the method according to the invention is advantageous and competitive with a ploughing technique when the first and second location are located at a distance of at most 1500m, in particular at most 1000m from each other.

By using a drilling operation, the cable may be introduced deeper in the seabed. In the method according to the invention, the cable may be introduced in the seabed at a depth of at least 1 meter, in particular at least 2 meter, more in particular 5meter. In comparison with the ploughing technique, advantageously, the cable may be better protected against damages.

In an embodiment of the method according to the invention, the method further comprises a preparing step of feeding the electrical cable, in particular the array cable, through a sleeve pipe to form an assembly. In subsequent steps of the method according to the invention, the array cable is handled together with the sleeve pipe until the sleeve pipe is fully pulled through the bore hole. Advantageously, the sleeve pipe may protect the electrical cable during handling and pulling operations. In particular, the subsequent steps are steps, wherein one end of the assembly of sleeve pipe and array cable is positioned at the second location; the drill string is pulled back through the bore hole together with the assembly of the sleeve pipe and cable to the first location; and the sleeve pipe is decoupled from the drill string at the first location.

In an alternative embodiment of the method according to the invention, the sleeve pipe is first pulled through the drilled bore hole, where after the cable is fed through the sleeve pipe. The introduction of the sleeve pipe and the cable into the bore hole may be done in subsequent steps of the method. The cable may be fed into the sleeve pipe in the bore hole by using a pull cable for pulling the cable through the sleeve pipe.

The cable may be fully enclosed by the sleeve pipe. The cable is preferably shorter than the sleeve pipe such that the cable is fully inside the sleeve pipe. Herewith, the cable is protected against damages by the sleeve pipe. The assembly is pulled back from the second location through the bore hole to the first location. The assembly of the array cable and sleeve pipe is pulled through the bore hole. During a pulling operation pulling forces may be exerted which get over 10 tons (metric). Exerting such high pulling forces may damage an array cable. For that reason, the array cable is preferably assembled within the sleeve pipe. Advantageously, pulling forces are only exerted on the sleeve pipe, wherein the array cable remains unstressed inside the sleeve pipe. The sleeve pipe may have a diameter of at least 100mm, in particular at least 150mm, but preferably at least 200mm. Such diameters may provide sufficient play, such that the array cable within the sleeve pipe has a freedom to move and relax when mechanical stresses occur during pulling.

In an embodiment of the method according to the invention the sleeve pipe is arranged at a sleeve pipe guiding element. During the feeding of the cable through the sleeve pipe, the sleeve pipe is disposed at the sleeve pipe guiding element. The method may comprise a step of guiding the assembly of cable and sleeve pipe to a water surface by the sleeve pipe guiding element. Preferably, the sleeve pipe guiding element is at least partially arranged at a quay. Preferably, the sleeve pipe guiding element comprises a plurality of rollers which are arranged in line. The rollers may centre and straighten the sleeve pipe. The sleeve pipe guiding element may have a length which substantially equals the length of a sleeve pipe.

In an embodiment of the method according to the invention, the method comprises a step of using a pull cable to pull the cable through the sleeve pipe. The pull cable may be winded on a winch. Initially, the cable may be winded on a cable reel. To carry out the step of the method the cable reel, the sleeve pipe guiding element and the winch are arranged in line. The cable reel may be positioned at one end of the sleeve pipe or sleeve pipe guiding element and the winch may be positioned at the other end of the sleeve pipe or sleeve pipe guiding element. At first, the pull wire is fed through the sleeve pipe. Thereafter, the cable is coupled to the pull wire and pulled back through the sleeve pipe.

Alternatively, during the first step the sleeve pipe may be arranged at least partially at the water surface when the at least one cable is fed through the sleeve pipe. The sleeve pipe may comprise at least one floater to keep the sleeve pipe at least partially at the water surface. The winch for pulling the cable through the sleeve pipe may be arranged at the water surface. The winch may e.g. be arranged at a vessel or floating object. An arrangement at a water surface may provide a required work space to assemble a cable in a corresponding sleeve pipe.

In an embodiment of the method according to the invention, the method comprises a step of sealing at least one end of the sleeve pipe. An inner space in between the cable and the sleeve pipe may be filled with a fluid e.g. a cooling or lubricating fluid. At least one removable plug may be used to seal the sleeve pipe during installation.

It may be advantageous to seal the sleeve pipe after the seal pipe is filled with a cooling fluid. The cooling fluid may be provided to keep the temperature of the electrical cable during operation of the wind turbine below a predetermined temperature value. Advantageously, the present of a cooling fluid may increase an electrical capacity of an electrical cable and increase an admissible electric power over the electrical cable.

A fluid with lubricating properties may be applied to reduce stresses in the cable when the cable is pulled through the bore hole.

In an embodiment of the method according to the invention, the method comprises a step of connecting at least one floater to the sleeve pipe for keeping the sleeve pipe at least partially floating at the water surface. Floating properties of the sleeve pipe may improve a transport of the sleeve pipe to the wind farm. During transport to the wind farm, at least two sleeve pipes may be grouped together. At least two sleeve pipes may be arranged in parallel and transported by a control tug. When the control tug arrives at a predetermined location, one of the sleeve pipes out of the group may be disconnected and at least partially sunken to the water floor.

In an embodiment of the method according to the invention, the method comprises a step of providing a vessel for transporting a drill-pull rig to the first location and for launching the drill-pull rig to the first location at the water floor. A second vessel beside the control trug may reduce operational tracks in the wind farm. The launched and sunken drill-pull rig may have a simple configuration.

In the method according to the invention, a drill-pull rig may be used which has a frame comprising a drill string guidance, anchoring means at a lower region of the frame, and a drill string push-pull mechanism for pushing or pulling the drill string. The drill string is preferably out of one piece. The drill string has a length of at least 100m, in particular at least 500m. The drill string may be coupled to the drill-pull rig before sinking the drill-pull rig to the water floor. The drill string may comprise at least one floater to keep the drill string at least partially at the water surface. The push-pull mechanism may have a double acting drill string clamp comprising two clamp parts which alternating clamp the drill string and translate the drill string in an axial direction of the drill string. Advantageously, no coupling mechanism is provided on the drill-pull rig for coupling a plurality of drill rods to obtain the necessary long drill string. Advantageously, the drill string is simple and free from a coupling mechanism and free from a storage for drill rods. The wind farm provides sufficient work space to handle the long drill string out of one piece.

In an embodiment of the method according to the invention, the method is carried out several times to overcome a large distance of e.g. 5km. The method may have a step of predetermining intermediate locations in between the first and second location at the waterfloor, wherein ends of introduced cable pieces are in a step of the method electrically interconnected at the intermediate locations. The intermediate locations may be defined in correspondence with a length of a used drill string. The intermediate locations may e.g. be equally spaced at 500 or 100 metres. The connected ends of the cable pieces may be brought into the seabed in a next step to protect the cable.

In an embodiment of the method according to the invention a drill barge is used for storing at least one drilling means like flushing means and control means. The drill barge is a floating object and serves for storing drilling necessities at water level. The drill barge may be used to store e.g. drilling fluids.

In an embodiment of the method according to the invention the method further comprises a step of using a swivel to establish an underwater coupling of the end of the sleeve pipe to the end of the drill string. Advantageously, the swivel permits a rotating pulling back of the drill string with a substantially non-rotating sleeve pipe. The rotational pull back of the drill string may reduce friction, while the non-rotating sleeve pipe prevents inadmissible twisting of the electrical cable.

In an embodiment of the method according to the invention the method further comprises a step of removing an end portion of the sleeve pipe after pulling the sleeve pipe through the bore hole to expose a cable portion of the cable in the sleeve pipe. By exposing the cable at the ends of the sleeve pipe, the cable may become ready to be electrically connected to a wind turbine.

Further, the invention relates to an underwater cable digging system for drilling a drill string in a water floor to create a bore hole and for pulling an electrical cable in the bore hole in the water floor according to claim 16.

Further, the invention relates to an assembly of a sleeve pipe and at least one electric, in particular an array cable for a windfarm, for carrying out the method according to the invention according to claim 25. The assembly may be part of the under water cable digging system.

Further, the invention relates to a use of the method according to the invention for electrically connecting a wind turbine. In particular, the invention relates to a use of the method, wherein the wind turbine is electrically connected to a power collection system and/or to another wind turbine of a wind farm. Further, the invention relates to a use of the method for electrically connecting a group of wind turbines to a land station at the coast. In particular, the method according to the invention may be used to connect the land station from a starting location under water, wherein the drill-pull rig is sunken to that location. Preferably, the starting location is located at a distance of at most 1500m, in particular at most 1000m, more in particular at most 500m, from the land station, such that the drill string out of one piece may have a length of respectively at most 1500m, 1000m, or 500m.

Further preferred embodiments are defined in the subclaims.

The invention will be explained in more detail with reference to the appended drawings. The drawings show a practical embodiment according to the invention, which may not be interpreted as limiting the scope of the invention. Specific features may also be considered apart from the shown embodiment and may be taken into account in a broader context as a delimiting feature, not only for the shown embodiment but as a common feature for all embodiments falling within the scope of the appended claims, in which:
Fig. 1A - 1J show in schematic views subsequent steps of an embodiment of the method according to the invention; and
Fig. 2 provides in a schematic top view an overview of an arrangement to carry out the method according to the invention.

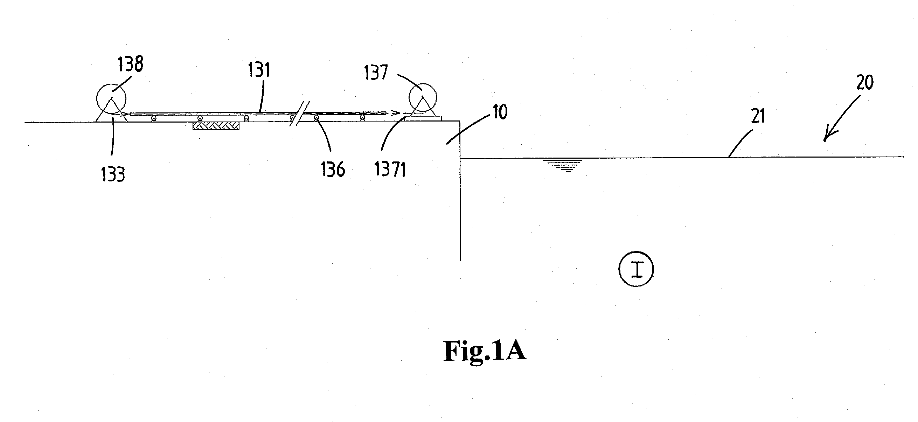

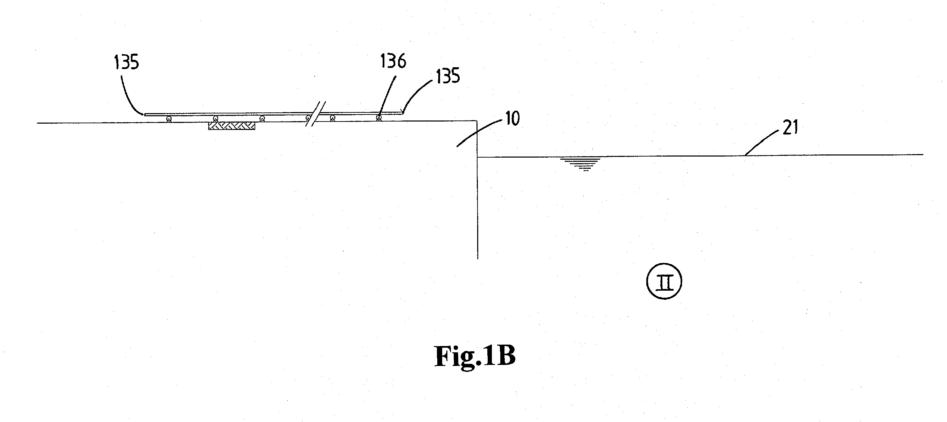

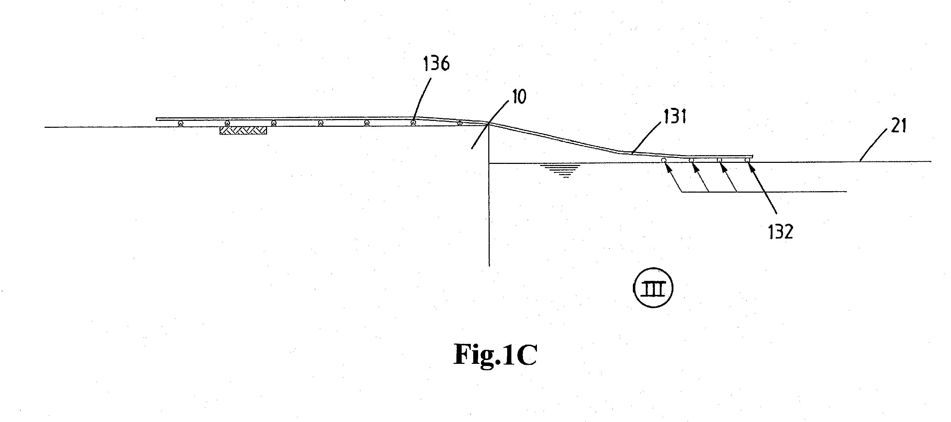

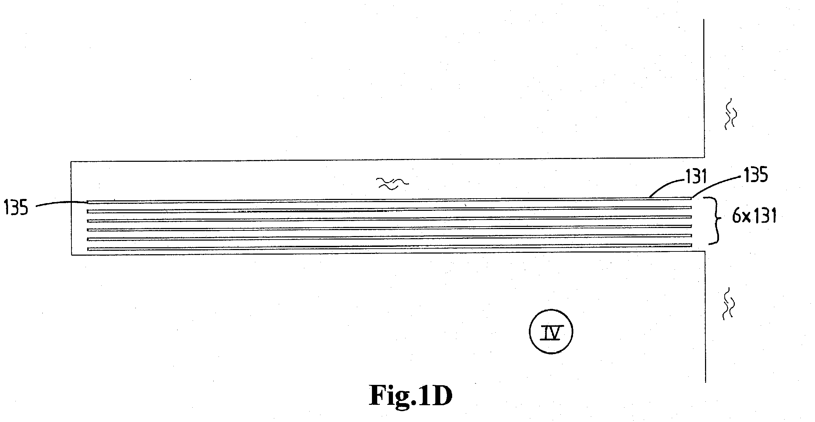

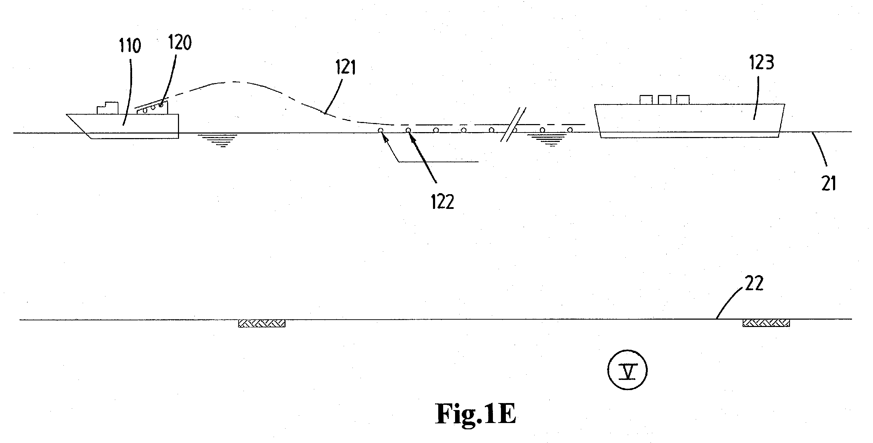

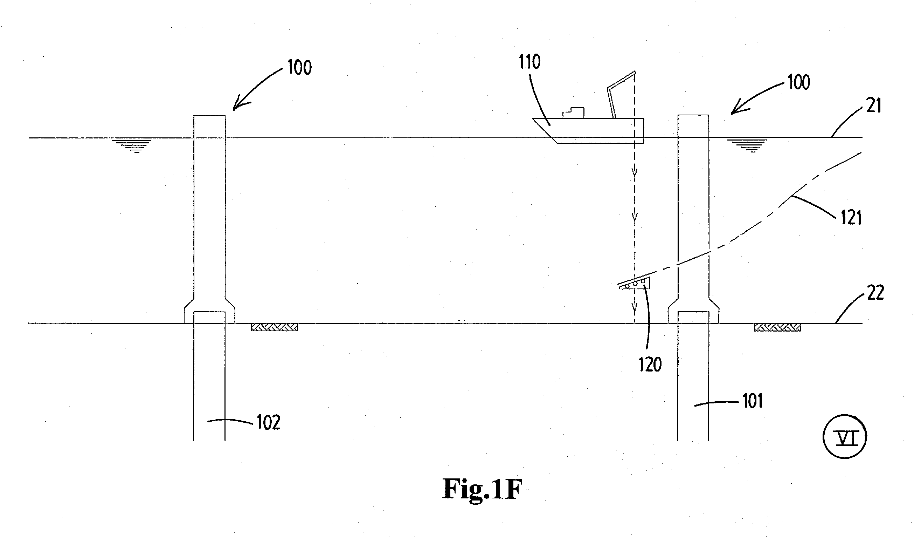

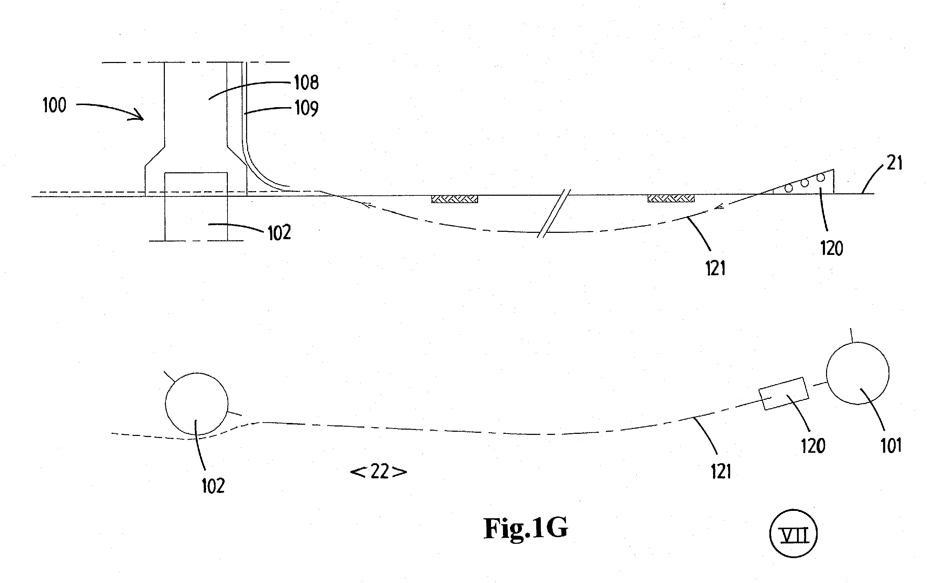

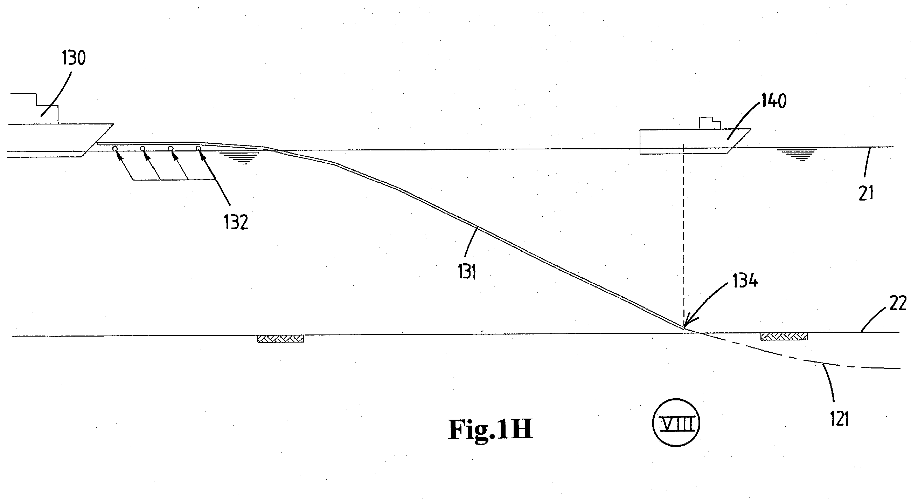

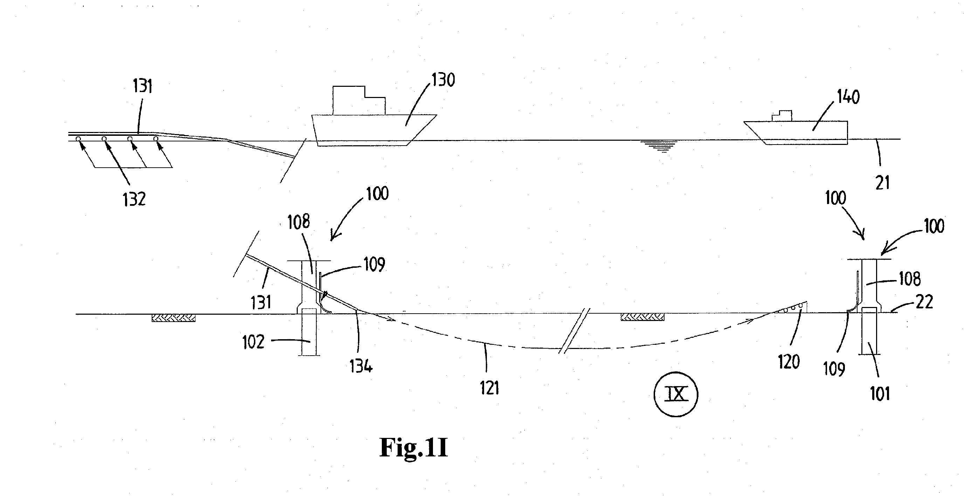

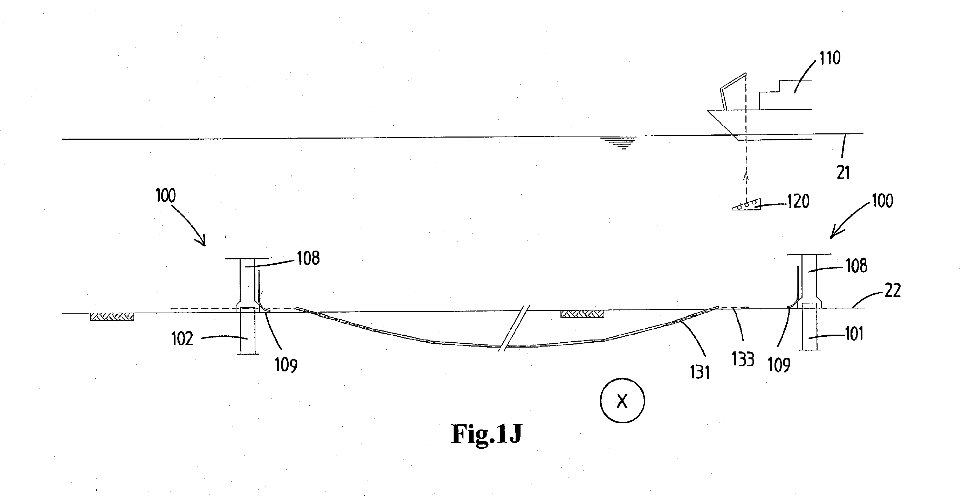

Identical reference numbers in the drawings correspond with similar or identical features. Fig. 1 provides in subsequent views which correspond with subsequent steps an embodiment of the method according to the invention.

Fig. 1A shows in a schematic view a first step I of the method according to the invention. A first step of the method is performed at a quay 10 adjacent a water body 20 with a water surface 21. During the first step at least one cable 133 is inserted and passed through at least one sleeve pipe 131.

At least one cable reel 138 is arranged at the quay 10 adjacent a water body 20 which cable reel 138 stores at least one cable 133. The at least one cable 133 is wounded on the cable reel 138. The cable 133 may be an electric cable. In particular, the cable is an electric cable for electrically connecting wind turbines 100 of a wind farm. The cable may have a length of about 500meters to 1000meters which may correspond to a distance in between two wind turbines of a wind farm. The cable reel 138 has preferably a cable 133 capacity of just one cable. Advantageously, the cable reel 138 may remain compact which improves the handling of the cable reel 138 at a working space.

A plurality of cables 133 may be arranged in an array on side by side arranged cable reels to feed the cables together through corresponding sleeve pipes 131. The corresponding sleeve pipes 131 may be arranged in an array at the quay 10 close to the water body 20 with the water surface 21.

The sleeve pipe 131 may be arranged on a sleeve pipe guiding element 136 during the step of feeding at least one cable 133 into the sleeve pipe 131. The guiding element 136 may be used to guide the sleeve pipe to the water surface. The at least one cable reel 138 is positioned at one end of the at least one sleeve pipe 131. The cable 133 on the reel is aligned with the at least one sleeve pipe 131 at the quay 10. The sleeve pipe 131 is preferably arranged at the quay 10 which has an advantage in that the sleeve pipe 131 may remain clean at the inside and substantially free from water which may give the sleeve pipe 131 floating properties. The sleeve pipe 131 has a length of at least 300m, in particular at least 500m and more in particular at least 800m. The sleeve pipe 131 has a diameter of at least 100mm, in particular at least 200mm. The sleeve pipe 131 may be made of a plastic material, in particular HDPE. The sleeve pipe 131 may be assembled by sleeve pipe elements. The sleeve pipe elements may have a length of about 20m and may be welded to each other to obtain a long continuous sleeve pipe 131.

During the first step, the at least one cable 133 is inserted in the at least one sleeve pipe 131. A pull wire 1371 is used to pull the cable 133 through the sleeve pipe 131. The pull wire 1371 is in a preparing step fed through the sleeve pipe 131 and connected to the cable 133. To feed the cable 133 in the sleeve pipe, the pull wire is winded back on a winch 137. When the cable extends through the sleeve pipe, the pull wire 1371 is disconnected.

Fig. 1 B shows in a schematic view a second step II of the embodiment of the method according to the invention. The cable 133 is fed through the sleeve pipe 131. Both ends of the cable 133 are inside the sleeve pipe 131. The sleeve pipe rests on the sleeve pipe guiding element 136. In the second step of the method according to the invention at least one of the ends of the sleeve pipe is sealed. Preferably, both ends of the sleeve pipe are sealed. The sleeve pipe is closed by using plugs 135. The plugs 135 are removable mounted to the ends of the sleeve pipe 131. The plugs 135 may prevent the cable 133 inside the sleeve pipe to get contaminated.

Fig. 1C shows in a schematic view a third step III of the embodiment of the method according to the invention. In the third step, the sealed sleeve pipe is introduced in the water body 20. At least one floater 132 is mounted to the sleeve pipe 131 to keep the sleeve pipe at least partially in floating condition. The sleeve pipe 131 is pushed to the water body 20 by the sleeve pipe guiding element 136 which comprises at least one driven guiding support.

Fig. 1D shows in a schematic view a fourth step IV of the embodiment of the method according to the invention. In the fourth step, at least one of the removable plugs 135 is removed to fill an inner space of the sleeve pipe 131 with a fluid. The fluid may be a cooling fluid like water, in particular seawater, and/or a lubricant fluid, in particular bentonite. After filling the sleeve pipe inner space with a fluid, the sleeve pipe is sealed again. During the fourth step, the at least one sleeve pipe is transported to a predetermined position in the wind farm. At least two sleeve pipes 131 may be grouped together for transport. At the predetermined position, the at least one sleeve pipe 131 is brought in position to bring the sleeve pipe 131 to the water floor 20.

Fig. 1 E shows in a schematic view a fifth step V of the embodiment of the method according to the invention. In the fifth step a vessel 110 is provided which transports a drill-pull rig 120 to a predetermined position. The vessel 110 is located at a predetermined position to start a drilling operation at a predetermined position at the seabed. In particular, the drilling operation starts at a predetermined position at a water floor close to a foundation 101 of a wind turbine 100. The drill-pull rig 120 is arranged to operate under water and to operate a directional drilling bit. A remote control station is provided on board of the vessel 110 to operate the drill-pull rig 120 after it is sunken to the seabed. In particular, the drill-pull rig 120 has a double acting drill string clamp. The drill string clamp may have two clamp parts which alternating clamp the drill string and translate the drill string in axial direction.

In the fifth step, before sinking down the drill-pull rig 120, a drill string 121 is connected to the drill-pull rig 120. The drill string 121 is a continuous drill string 121 with a smooth outer surface which may advantageously simplify the drilling operation. By using a drill string 121 out of one piece, it is not necessary to couple drill string elements. Preferably, the drill string 121 is coupled to the drill-pull rig 120 above water level, because in practise it will be more convenient to couple the drill string in an ambient environment. The drill string may comprise at least one drill string floater 122 to keep the drill string at the water surface. The drill string 121 has a length which corresponds with a sleeve pipe 131 which has to be brought into the water floor. In the shown embodiment, the distal end of the drill string 121 is supported by a drill barge 123. The drill barge is provided with drilling means like lubricant supply, power supply etc.

Fig. 1 F shows in a schematic view a sixth step VI of the embodiment of the method according to the invention. In the sixth step, a drill-pull rig 120 is launched from the vessel 110 and sunken to the water floor 22, in particular the seabed. The vessel 110 which has transported the drill-pull rig 120 is positioned adjacent a first wind turbine foundation 101. The vessel 110 has a crane for launching the drill-pull rig 120. The drill-pull rig 120 has advantageously a simple configuration. No coupling devices for coupling drill string elements, no pipe storage and no personal space are necessary. The drill-pull rig 120 has a frame comprising a drill string guidance, anchoring means at the lower region of the frame, and a drill string push-pull mechanism. Other component like flushing means and control means are situated at the drill barge 123. When the drill-pull rig 120 reaches the seabed close to a base of a windturbine 100, the drill-pull rig 120 is positioned and anchored to the seabed 22. The drill string 121 is still coupled to the drill-pull rig 120. At least one of the floaters 122 of the drill string may be removed to allow the drill string to sink. Subsequently, the drill-pull rig 120 is ready to start drilling. Fig. 1 F further shows a second wind turbine foundation 102. The first and second wind turbine foundation 101, 102 define respectively a starting point, i.e. the first location and an exit point, i.e. the second location of the drilling path.

Fig. 1 G shows in a schematic side and corresponding top view a seventh step VII of the embodiment of the method according to the invention. In the seventh step a pilot drilling is performed. The drill string 121 is drilled from the starting point at a first wind turbine foundation 101 to the exit point at the second wind turbine foundation 102. The drilling operation is a HDD, horizontal directional drilling, operation. Preferably, a gyroscopic drilling head is used to determine the drilling path. The gyroscopic drilling head may be a conventional drilling head, which is known from prior art HDD technology. The HDD technology makes it possible to position the exit point at a distance of at most 1 meter, in particular at most 30cm from a predetermined exit point adjacent the second wind turbine foundation 102. The drilling path is preferably arranged at a depth of at least 1 meter to at most 15 meter, in particular at least 2 meters to at most 10 meters under the water floor 22. Preferably, a drilling path having a bore hole of at least 300mm is produced.

Fig. 1 H shows in a schematic view an eight step VIII of the embodiment of the method according to the invention. In the eight step, the sleeve pipe 131 including the cable 133 is transported to the exit point by a control tug 130 and is sunken to the water floor 22. The control tug 130 may be a vessel for dragging an array or bundle of sleeve pipes 131. Each pair of wind turbines 101,102 which need to be interconnected can be provided with a sleeve pipe 131 out of the bundle of sleeve pipes. The distal end of the sleeve pipe 131 at the water floor 22 at the exit point is subsequently coupled to the drill string 121. The sleeve pipe 131 is sunken to the water floor by removing the floaters 132 of the sleeve pipe. The floaters 132 can e.g. be slided to a proximal end of the sleeve pipe 131, such that the distal end of the sleeve pipe 131 submerges under water. Preferably, the end of the sleeve pipe 131 is provided with a swivel 134 for an easy underwater coupling. The swivel 134 permits a rotating pull back of the drill string which reduces drag forces. During the rotation of the drill string, the swivel 134 causes the sleeve pipe 131 to translate without hardly any rotation such that the sleeve pipe 131 and internal cable 133 do not or do hardly not twist. A cable 133 could get damaged by a twisting operation. The sleeve pipe 131 is connected to the drill string by a diving operation. After the coupling of the sleeve pipe 131, an assembly of the sleeve pipe 131 and drill string 121 is pulled back trough the bore hole.

Fig. 1I shows in a schematic view a ninth step IX of the embodiment of the method according to the invention. In the ninth step, the sleeve pipe is pulled back together with the drill string. Fig. 1I further shows the control tug 130, wherein the sleeve pipe 131 is released from the control tug 130. The sleeve pipe 131 is introduced into the water floor 22 at the exit point and pulled along the drill path through the bore hole towards the starting point of the drilling operation. At the starting point, the distal end of the sleeve pipe 131 with the internal cable 133 is decoupled from the drill string 121. Hereafter, the cable 133 is in position to get electrically connected to the wind turbine. The length of the sleeve pipe is preferably dimensioned in correspondence with the length of the drill path through the seabed including a surplus for connecting the cable 133 to the wind turbine 100. Herewith, both the proximal as the distal end of the sleeve pipe 131 are in position to be electrically connected to the wind turbine after the step of pulling back the drill string 121.

Fig. 1J shows in a schematic view a tenth step X of the embodiment of the method according to the invention. In the tenth step, an end portion of the sleeve pipe 131 may be removed to expose a cable portion of the internal cable 133. Generally, the wind turbine comprises a J-tube 109 as a passageway for the cable to enter the wind turbine and guide the cable to a top region of the wind turbine. The exposed cable portion may be fed into the J-tube 109 of the wind turbine. Alternatively, the end of the sleeve pipe including the internal cable may be introduced into the J-tube.

During the tenth step, the drill-pull rig 120 may be repositioned at the seabed for a next drilling operation. The drill string may remain coupled to the drill-pull rig 120, when the vessel 110 lifts the drill-pull rig from the water floor and moves the drill-pull rig to another location. It is not necessary to lift the drill-pull rig on board, the drill-pull rig 120 can be dragged through the water and repositioned at a next starting point. Once the drill-pull rig 120 arrives at the next location, the drilling operation can be started quickly again.

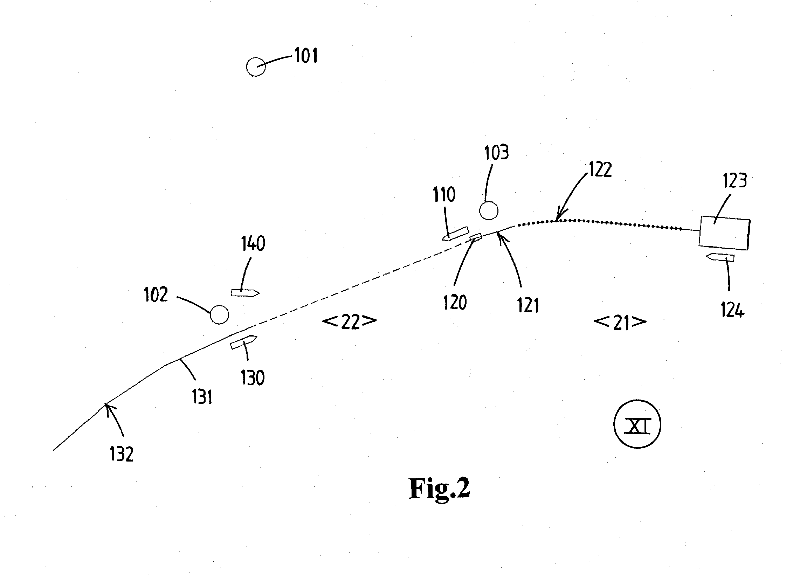

Fig. 2 provides in a schematic top view an overview of an arrangement to apply the method according to the invention.

The overview shows three wind turbine foundations 101,102,103 which has to be interconnected.

A drill barge 123 is provided for controlling the drilling operation. The drill string 121 is connected to the drill barge 123 and provided with a plurality of floaters 122. Drilling fluids may be fed to the drill string 121 during drilling and slurry generated during drilling may be discharged at the drill barge 123.

A vessel 110 is provided for transporting and launching a drill-pull rig 120. The drill-pull rig 120 can be sunken down to the water floor 22 from the vessel 110.

A control tug 130 is provided for transporting and delivering a sleeve pipe 131. The sleeve pipe 131 has to be coupled to the drill string 121 at an exit point at the water floor 22. A diving vessel 140 may be provided to assist the operation, wherein the sleeve pipe 131 is coupled to the drill string 121.

Numerous variants are possible in addition to the embodiment shown. An introduced electrical cable may be used to electrically connect a wind turbine, but may also be used to connect other objects, like electrical operated shutters of gas or oil wells. In a variant, the electrical cable can be fed through the sleeve pipe at open water in stead of at the quay.

Although the invention has been disclosed with reference to particular embodiments, from reading this description those of skilled in the art may appreciate changes and modifications that may be possible from a technical point of view but which do not depart from the scope of the invention as described above and claimed hereafter. It will be understood by those skilled in the art that various changes may be made and equivalents may be substituted for elements thereof without departing from the scope of the invention. Modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

Thus, the invention provides a method for introducing a cable, in particular an array cable for electrically connecting a wind turbine, into a water floor by carrying out a drilling operation. The drilling operation may minimise operational efforts and costs. Additionally, the method is environmental friendly and may result in better protected cables in the water floor.

## Claims

1. Method for introducing an electrical cable, in particular an array cable for a wind farm, at a depth in a water floor, in particular in a seabed, of a water body, such that the cable extends from a first location to a second location at the water floor, comprising the steps of:
• sinking down a drill-pull rig to the water floor;
• drilling a drill string from the first location to the second location to generate a bore hole;
• positioning an end of the cable at the second location;
• coupling the end of the cable to an end of the drill string at the second location;
• pulling the drill string back together with the cable from the second location through the bore hole to the first location; and
• decoupling the cable from the drill string at the first location.

2. Method according to claim 1, wherein the method further comprises a preparing step of feeding the electrical cable, in particular the array cable, through a sleeve pipe to form an assembly.

3. Method according to claim 2, wherein the sleeve pipe is arranged at a sleeve pipe guiding element for guiding the assembly of cable and sleeve pipe to a water surface.

4. Method according to claim 1, wherein a sleeve pipe is first pulled through the drilled bore hole, where after the electrical cable is fed through the sleeve pipe.

5. Method according to any of the claims 2-4, wherein the method comprises a step of sealing at least one end of the sleeve pipe.

6. Method according to any of the claims 2-5, wherein the sleeve pipe is filled with a cooling or lubricating fluid.

7. Method according to any of the claims 2-6, wherein the method comprises a step of connecting at least one floater to the sleeve pipe for keeping the sleeve pipe at least partially floating at a water surface.

8. Method according to any of the claims 2-7, wherein at least two sleeve pipes are grouped together during transport to the second location.

9. Method according to any of the preceding claims, wherein the method comprises a step of providing a vessel for transporting a drill-pull rig to the first location and for launching the drill-pull rig to the first location at the water floor.

10. Method according to any of the preceding claims, wherein a drill-pull rig is used which has a frame comprising a drill string guidance, anchoring means at a lower region of the frame, and a drill string push-pull mechanism for pushing and pulling a drill string out of one piece, wherein the drill string has a length of at least 100m.

11. Method according to any of the preceding claims, wherein the drill string is coupled to the drill-pull rig before sinking the drill-pull rig to the water floor.

12. Method according to any of the preceding claims, wherein the method comprises a step of connecting at least one floater to the drill string for keeping the drill string at least partially floating at a water surface.

13. Method according to any of the preceding claims, wherein a drill barge is used for storing at least one drilling means, like flushing means and control means, for performing a drilling operation.

14. Method according to any of the preceding claims, wherein a swivel is used to establish an underwater coupling of the cable, in particular the end of the sleeve pipe, to the end of the drill string.

15. Method according to any of the preceding claims, wherein the method further comprises a step of removing an end portion of the sleeve pipe after pulling the sleeve pipe through the bore hole to expose a cable portion of the cable in the sleeve pipe.

16. Underwater cable digging system comprising
a drill-pull rig for drilling a drill string in a water floor to create a bore hole in the water floor from a first location to a second location, and for pulling back the drill string together with a coupled electrical cable through the bore hole from the second location to the first location, wherein the drill-pull rig comprises a push-pull mechanism for pushing or pulling the drill string.

17. Underwater cable digging system according to claim 16, wherein the drill-pull rig comprises a push-pull mechanism for pushing or pulling the drill string which push-pull mechanism has a double acting drill string clamp comprising two clamp parts which alternating clamp the drill string and translate the drill string in an axial direction of the drill string.

18. Underwater cable digging system according any of the claims 16 or 17, wherein the drill-pull rig has a frame comprising a drill string guidance, anchoring means at a lower region of the frame, and the push-pull mechanism for drilling and pulling a drill string out of one piece.

19. Underwater cable digging system according to any of the claims 16-18 further comprising a sleeve pipe guiding element for guiding a sleeve pipe to a water surface of a water body.

20. Underwater cable digging system according any of the claims 16-19, wherein the sleeve pipe guiding element comprises a plurality of rollers which are arranged in line for supporting the sleeve pipe.

21. Underwater cable digging system according any of the claims 16-20, wherein a winch is arranged at the end of the sleeve pipe guiding element for winding a pull wire and/or wherein a cable reel is arranged at the opposite end of the sleeve pipe guiding element for storing an electrical cable.

22. Underwater cable digging system according any of the claims 16-21, further comprising a drill barge for storing at least one drilling means like flushing means and control means.

23. Underwater cable digging system according any of the claims 16-21, further comprising a control tug for transporting the sleeve pipe and/or cable to the second location.

24. Underwater cable digging system according any of the claims 16-22, further comprising a vessel for transporting the drill-pull rig to the first location and for launching the drill-pull rig to the water floor.

25. Assembly of a sleeve pipe and at least one array cable for carrying out the method according to any of the claims 1- 15.

26. Assembly according to claim 25, wherein the sleeve pipe comprises at one end a swivel to establish an underwater coupling of the end of the sleeve pipe to the end of the drill string.

27. Use of the method for electrically connecting a wind turbine.

28. Use according to claim 27, wherein the wind turbine is electrically connected to a power collection system and/or to another wind turbine of a wind farm.

29. Use according to claim 27, wherein the wind turbine is electrically connected to a land station at a coast.
